# EUROPÄISCHE PATENTANMELDUNG

(11) **EP 2 196 119 A1**
(43) Veröffentlichungstag der Anmeldung: **16.06.2010**
(21) Anmeldenummer: 09075382.3
(22) Anmeldetag: 21.08.2009
(51) Int. Cl.: A47J 36/12

(54) **Behälter für Esswaren**

(30) Priorität: 22.08.2008 NL 1035855
(71) Anmelder: Muller S.W., 3815 VM Amersfoort (NL)
(72) Erfinder: Muller S.W., 3815 VM Amersfoort (NL)

(57) **Zusammenfassung**

Es geht hier um einen Behälter (1) zum frisch halten von Esswaren, ins besondere für Brot, bei dem die Öffnung des Innenraumes versehen ist von einer selbstschliessenden Schiebe oder Klappe (5).
Dies geschieht durch die Schiebe oder Klappe (5) zu öffnen, wobei diese in offener Stellung in einer vorher eingestellten Zeitspanne automatisch fixiert wird. Nach dem Verstreichen dieser Zeit wird die Fixierung unterbrochen, wodurch die Klappe (5) sich von selbst wieder schliesst. Dieser Behälter (1) kann auch versehen werden von einem Kühlaggregat oder Kühlelement, womit beabsichtigt wird, andere Esswaren als Brot kalt zu servieren, zum Beichspiel auf einem Bufett.

## Beschreibung

Es geht um einen Behälter zum Frischhalten von Esswaren, ins besondere für Brot, bei dem die Öffnung des Innenraumes versehen ist von einer selbstschliessenden Schiebe oder Klappe.

Dies geschieht durch öffnung der Schiebe oder Klappe, wobei diese in offener Stellung in einer vorher bestimmten Zeitspanne automatisch fixiert wird. Nach dem dem Verstreichen dieser Zeit wird die Fixierung unterbrochen, wodurch die Klappe sich von selbst wieder schliesst.

Es geht hier um einen Behälter für Brot, der oft durch mehreren Personen benutzt wird, zum Beichspiel durch Gäste von einem Hotel-Restaurant beim Frühstuck oder beim Brunch, die im allgemeinen in der Form eines Bufetts serviert werden.

Wenn Gäste von einer üblichen Brottrommel Gebrauch machen, wird ein grosser Teil der Gäste aus Unachtsamkeit die Brottrommel einfach offen fassen, oder man lasst sie absichtlich offen, weil fortwährend mehrere Personen um das Bufett herumgehen um Esswaren zu entnehmen

Manchmal werden auch feuchte Tücher zum Abdecken des Brots verwendet, aber diese werden wohl beiseite gelegt und hinterer meistens nicht zurückgelegt. Ausserdem sieht es nicht fachmännisch und nicht attraktiv aus.

Solche Bufetts dauern meistens 2 Stunden oder länger, zu lange, um geschnittenes Brot während diese Zeit frisch zu halten. Ausserdem werden meistens mehrere Brotsorten auf einem Bufett angeboten, wodurch die Fluktuationsrate pro Sorte noch zusätzlich verzögert wird, was wiederum das Austrocknen fördert.

Mit der Erfindung wird beabsichtigt einen Behälter für Brot zu schaffen, der die hervorgebrachten Nachteile aufhebt, wobei das Ziel, kontinuierlich über fisches Brot zu verfügen, jeden Moment gewährteistet is.

Dies kann erreicht werden, indem der Behälter für Brot mit einer selbstschliessenden Klappe ausgestattet wird.

Die Klappe wird prinzipiell manuell geöffnet und wird sodann in der offenen Stellung automatisch fixiert. Nach Verstreichen einer vorher bestimmten Zeitspanne wird die Fixierung automatisch unterbrochen, wodurch die Klappe sich sich selbst wieder schliesst.

Ausser dem manuellen Bedienen der Klappe kann das Öffnen auch elektrisch geschehen durch einen Umschalter oder Bewegungssensor.

Diese Methode ist im weiteren verlauf, betreffend das Fixieren und Selbstschliessen der Klappe, im Prinzip identisch der manuellen Version.

Der Innenraum des Behälters ist versehen von einem zweiten Behälter, der ausgetauscht werden kan und in dem sich das Brot oder die Esswaren befinden.

Wenn der Brotvorrat ergänzt werden muss, verwendet man mehrere dieser Behälter, was derart zu verstehen ist, dass diese Behälter schon in der Küche mit Brot gefüllt werden, so dass man nur den Behälter umtauschen und das Brot nicht in Anwesenheit der Gäste mit den Händen hineinlegen muss.

Ebenfalls können Behälter mit selbstschliessender Klappe ausgestattet werden mit einem Kühlaggregat oder ein Kühlelement, beabsichtigt für Esswaren, die auf einem Bufett gekühlt serviert werden.

Kälte Gerichte wie Salate, Käse, Fleisch und geräucherte Fischsorten werden dadurch Weniger schnell austrocknen und verfärben, so dass sie länger unverbraucht und frisch aussehen, keine Verschlechterung im Geschmack entsteht und natürlich viel länger haltbar sind.

Weitere Einzelheiten und Vorteile ergeben sich aus folgender Beschreibung der in den Zeichnungen dargestellten Ausführungsbeispielen.
Figur 1 zeigt schematisch eine Seitenansicht des Behälters in geschlossenem Zustand.
Figur 2 zeigt schematisch eine Seitenansicht des Behälters in geöffnetem Zustand.

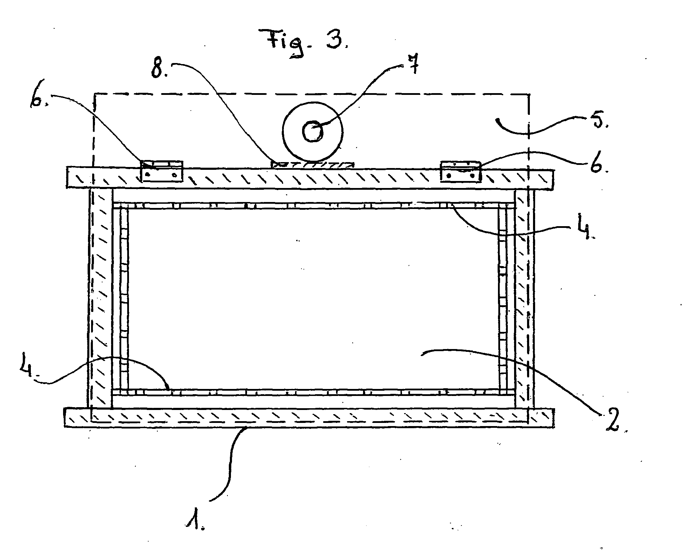

Figur 3 zeigt eine Sicht von oben auf den Behälter.

Der Innenraum 2 für das Brot des vorliegenden Behälters 1 ist ausgestattet mit einem zweiten Behälter 4, der in den Innenraum des Behälters 1 hineinpasst.

In diesen Behälter 4 werden zum Schluss das Brot oder die Esswaren hineingelegt, was so zu verstehen ist, dass der Behälter 4 schon in der Küche gefüllt werden kann, so dass man nur den Behälter 4 mit dem Brot umtauschen und nicht in Anwesenheit der Gäste das Brot nicht mit den Händen hineinlegen muss.

Hierzu wird bemerkt, dass ein Behälter 4, der für Esswaren wie Fisch, Fleisch und Salate benutzt wird, eine deutlich andere Form hat, bei der die Ausführung dargestellt sein könnte wie eine flache oder gebogene Schale, wohl oder nicht versehen mit einem Flansch.

Beim Gebrauch wird die Klappe 5 häufig geöffnet und im höchsten Stand automatisch fixiert. Diese Fixierung kann zum Beichspiel erreicht werden mit einem Elektromagnet oder mit einem Vakuum durch einen an der Unterseite der Klappe 5 angeordneten Saugnapf 7. Der Deutlichkeit wegen wird der Magnet in den Figuren nicht gezeigt.

Der Saugnapf 7 wird beim Öffnen der Klappe 5 nach unten verschoben und anschliessend, wenn die Klappe 5 beinahe ihren höchsten Stand erreicht hat, auf eine in schräger Lage angeordneten Plattform 8 gedrückt, wo, durch das jetzt entstehende Vakuum die Klappe 5 in diesem geöffneten Stand fixiert wird.

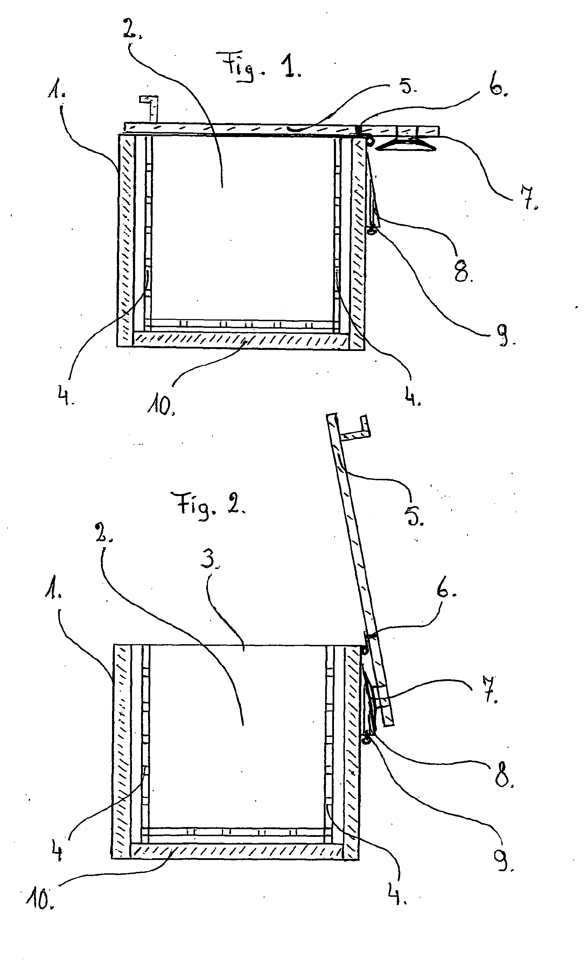

Dies wird gezeigt in Figur 2.

Die Plattform 8 ist versehen mit einer einstellbaren Öffnung 9, so dass die Zeitspanne des Vakuums eingestellt werden kann. Wird das Vakuum danach aufgehoben, wird die Klappe 5 mit grosser Schnellheid nach unten fallen.

Um dies zu vermeiden, wird die Klappe 5 mit einer mechanischen oder elektrischen Bremse ausgrüstet, so dass sich die Klappe 5 langsam nach unten bewegt und der Benutzer sich nicht erschreckt.

Es wurde festgestellt, dass in dem Patent DE 102005045777 die Rede ist von einem Behälter für Brot, wobei das Scharnier der bewegbaren Klappe ausgerüstet ist mit einer Bremse:

## Patentansprüche

1. Behälter zum frisch halten von Esswaren, ins besondere für Brot, **dadurch gekennzeichnet, dass** die Öffnung (3) des Innenraumes (2) versehen ist mit einer selbstschliessenden Schiebe oder Klappe (5).

2. Behälter nach Patentanspruch 1, **dadurch gekennzeichnet, dass** die Schiebe oder Klappe (5) in offener Stellung automatisch fixiert wird in einer vorher eingestellten Zeitspanne, wobei nach dem Verstreichen dieser Zeit die Fixierung unterbrochen wird, wodurch die Schiebe oder Klappe (5) sich von selbst wieder schliesst.

3. Behälter nach Patentansprüchen 1 und 2, **dadurch gekennzeichnet, dass** die Klappe (5) manuell geöffnet werden kann, wobei die Fixierung funktioniert durch ein Vakuum oder ein Elektromagnet.

4. Behälter nach vorhergehenden Patentansprüchen, **dadurch gekennzeichnet, dass** das Öffnen und Schliessen der Klappe (5) auch elektrisch geschehen kann durch einen manuellen Umschalter oder automatisch durch einen Bewegungssensor, der neben der Fixierung auch einen Elektromotor aktiviert, der das Öffnen und Schliessen der Klappe (5) ausführt.

5. Behälter nach vorhergehenden Patentansprüchen, **dadurch gekennzeichnet, dass** die Fixierung der Klappe (5) in der offenen Stellung, sowie ihre Zeitschaltung, sowohl mechanisch wie elektrisch geregelt werden kann.

6. Behälter nach vorhergehenden Patentansprüchen, **dadurch gekennzeichnet, dass** die Schiebe oder Klappe (5) aus zwei Lagen besteht, zwischen denen ein Luftlerer Raum ist, wodurch die Schiebe oder Klappe (5) eine nicht leitfähige Wärmebarriere formt.

7. Behälter nach Patentanspruch 1, **dadurch gekennzeichnet, dass** die klappe (5) in der offenen Stellung nicht fixiert wird, sodass, wenn die Klappe (5) losgelassen wird, die Schliessbewegung sofort einsetzt, aber so, dass diese bewegung sehr langsam verläuft und deswegen genügend Zeit bleibt, Brot aus dem Innenraum (2) zu entnemen

8. Behälter nach vorhergehenden Patentansprüchen, **dadurch gekennzeichnet, dass** die Schiebe oder Klappe (5) aus zwei Teile besteht, wobei diese zwei Teile sich beim Öffnen zugleich aus einander bewegen, wodurch jedes Teil der Klappe (5) die Hälfte der Öffnung umfasst

9. Behälter nach vorhergehenden Patentansprüchen, **dadurch gekennzeichnet, dass**, der Behälter (1) ausgestattet ist mit einem Kühlaggregat oder einem Kühlelement, beabsichtigt für Esswaren, die gekühlt serviert werden.

10. Behälter nach vorhergehenden Patentansprüchen, **dadurch gekennzeichnet, dass** der Innenraum (2) des Behälters (1) ausgestattet ist mit einem oder mehrere austauschbare Behälter, worin die Esswaren serviert werden.

11. Behälter nach vorhergehenden Patentansprüchen, **dadurch gekennzeichnet, dass** der vorliegende Behälter (4) für Esswaren auch in der form einer flachen oder gebogenen Schale dargestellt sein kann, wohl oder nicht versehen mit einem Flanch.

12. Behälter nach vorherliegenden Patentansprüchen, **dadurch gekennzeichnet, dass** der Innenraum (2) derartig eingerichtet ist, dass zwei oder mehr dieser Behälter in diesem Innenraum (2) übereinander gestapelt werden können.

13. Behälter nach vorherliegenden Patentansprüchen, **dadurch gekennzeichnet, dass** an der Aussenseite des Behälters ze sehen ist, wieviel der Behälter (4) sich im Innenraum (2) befinden.

14. Behälter nach vorherliegenden Patentansprüchen, **dadurch gekennzeichnet, dass** inmitten von oder die Seiten des Behälters (4) von einer oder mehreren Anhöhen ausgestattet sind, worüber eine Folie gespannt werden kann, wodurch die Folie die Esswaren wohl bedeckt, aber diese nicht berührt

15. Behälter nach vorherliegenden Patentansprüchen, **dadurch gekennzeichnet, dass** die Anhöhen des Behälters (4) einen losen Bestandteil formen und auf dem Behälter (4) lehnen und erst durch die darüber gespannte Folie fixiert werden, oder durch eine Spannfutter oder eine andere Befestigungsart an Behälter oder Schalen geeignet für Esswaren, fest und los zu kuppeln sind.

16. Behälter nach vorherliegenden Patentransprüchen, **dadurch gekennzeichnet, dass** die austauschbaren Behälter (4) ausgestattet sind mit einer Kode für verschiedene Gerichte, wobei mittels einen Impuls an der Aussenseite des Behälters (1) zu erkennen ist, welche Gerichte sich im Innenraum (2) befinden.
